# EUROPÄISCHE PATENTANMELDUNG

(11) **EP 4 353 520 A1**
(43) Veröffentlichungstag der Anmeldung: **17.04.2024**
(21) Anmeldenummer: 23201705.3
(22) Anmeldetag: 04.10.2023
(51) Int. Cl.: B60L 53/16, B60K 15/04, B60L 58/12, B60R 13/04, G01R 31/387, G08B 21/00, G09F 21/04, H02J 7/00, B60Q 1/50, F21S 43/14, F21S 43/20, B60Q 1/26, B60Q 3/64, B60K 15/05

(54) **INFORMATIONSANZEIGE AN DER FAHRZEUG-AUSSENSEITE, SOWIE VERFAHREN ZUM BETÄTIGEN EINES KLAPPENDECKELS ALS INFORMATIONSANZEIGE**

(30) Priorität: 13.10.2022 DE 102022210827
(71) Anmelder: Magna Exteriors GmbH, 63877 Sailauf (DE)
(72) Erfinder: WURSTER, Michael, 73732 Esslingen (DE); PAULE, Thomas, 63864 Glattbach (DE)
(74) Vertreter: Rausch, Gabriele

(57) **Zusammenfassung**

Informationsanzeige an der Fahrzeug-Außenseite bestehend aus mindestens einem Beleuchtungselement oder einem Display (6), das mit Lackschichten überlackiert ist, wobei eine der Lackschichten Wagenfarbe aufweist, und wobei ein Muster mit einem Laser durch Ablation in Form von Löchern (10) oder Flächen in allen Lackschichten erfolgt.

## Beschreibung

Die Erfindung betrifft einen Informationsanzeige. Für eine Informationsanzeige auf der Fahrzeug-Außenseite wird Licht nicht als dekorativer Effekt genutzt, sondern es sollen veränderbare Information zum Fahrzeug, zum Verkehr oder Warnhinweise etc. auf der Fahrzeugaußenfläche oder einer am Fahrzeug außen angebauten Fläche dargestellt werden.

Die Erfindung betrifft auch ein Verfahren zum Betätigen eines Klappendeckels als Informationsanzeige.

### Stand der Technik

Wenn die Anzeige nicht aktiv ist, soll das Anzeigefeld möglichst nicht erkennbar sein. Dadurch ist die Anzeige nur bei Bedarf zu sehen und im ausgeschalteten Zustand wird das Design des Fahrzeuges nicht beeinflusst.

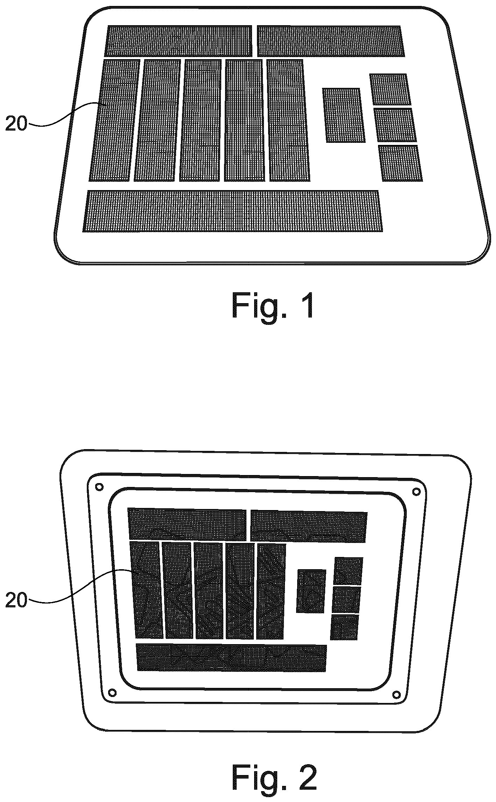

Aktuelle Durchleuchtungskonzepte sind auf einzelne Farben limitiert, z.B. die Farbe Schwarz mit einen sogenannten Black Panel, wie in den Figuren1 und 2 gezeigt.

Eine solche Lösung wird in der DE 10 2014 110 084 A1 offenbart. Hierein wird eine Außenfläche offenbart, die zumindest teilweise lichtdurchlässiges Substrat, das gegenüberliegende erste und zweite Oberflächen aufweist, eine Beleuchtungsquelle, die der zweiten Oberfläche des Substrats benachbart ist, und eine variabel lichtdurchlässige Schicht auf der ersten Oberfläche des Substrats, wobei die variabel lichtdurchlässige Schicht einen lichtundurchlässigen, opaken Abschnitt und einen lichtdurchlässigen Abschnitt umfasst. Die Beleuchtungsquelle ist zwischen einem beleuchteten Zustand und einem unbeleuchteten Zustand betätigbar, die Außenverkleidungskomponente betriebsfähig, Informationen über zumindest einen Ladezustand der Batterie zu empfangen. Der lichtdurchlässige Abschnitt definiert visuell wahrnehmbare Kennzeichnungen, wenn er durch die Beleuchtungsquelle in ihrem beleuchteten Zustand hinterleuchtet wird. Wenn sich die Beleuchtungsquelle in ihrem beleuchteten Zustand befindet, zeigen die visuell wahrnehmbaren Kennzeichnungen zumindest einen Ladezustand der Batterie an.

Aus der DE 10 2011 006 476 A1 ist eine Ladeeinrichtung mit Innenraum bekannt, wobei der Innenraum mit einem Deckel oder einer Klappe verschlossen werden kann. Ein Deckel kann beispielsweise von der Karosserie abgenommen, das heißt gelöst werden oder aber mechanisch mit der Karosserie verbunden sein. Eine Klappe ist mit dem Elektrofahrzeug dauerhaft klappbar verbunden, so zum Beispiel über ein Scharnier. Im Innenraum befinden sich die für ein Aufladen vorgesehenen elektrischen Kontakte der Ladeeinrichtung sowie in einer Ausführungsform zumindest ein Beleuchtungsmittel, mit dem der Innenraum beleuchtet werden kann. Der Deckel bzw. die Klappe sind zumindest teilweise derart transparent, dass das Licht des Beleuchtungsmittels auch von außen durch den Deckel bzw. die Klappe hindurch sichtbar ist. Alternativ oder ergänzend können ein oder mehrere Beleuchtungsmittel, so zum Beispiel LEDs, also Licht emittierende Dioden seitlich angrenzend an oder um den Deckel oder die Klappe herum angeordnet sein. Von dem oder den Beleuchtungsmitteln ausgestrahltes Licht kann dann insbesondere seitlich in den Deckel eintreten, der dann u. a. entsprechend seitlich transparent ausgestaltet ist. Über Reflektion, vorzugsweise über Totalreflektion kann Licht innerhalb der Klappe oder des Deckels dann zu einem transparenten Bereich des Deckels oder der Klappe gelangen, über den das Licht dann nach außen austreten kann.

Ein Problem bei den verdeckten Anzeigen ist dabei, dass durch das Durchleuchten durch Lacke oder eingefärbte Materialien eine Farbverschiebung des Lichts entsteht, sodass über die Farbschicht hindurch ein Licht in abweichenden Wellenlängen für den Betrachter sichtbar ist.

DE 10 2014 206 034 A1 zeigt ein Bauteil für ein Kraftfahrzeug aus einer Folie, die teilweise transparente Stellen aufweist und die mit einem deckenden Lack bedruckt ist. Die Aussparungen werden durch Siebdrucktechnik erzeugt. Es liegt einen Lackschicht vor, die Öffnungen aufweist, die durch Siebdruck und nicht durch den Einsatz eines Lasers erzeugt werden.

DE 10 2011 114 075 A1 zeigt eine Tankmulde auch für einen elektrisch betriebenes Fahrzeug. Eine Anzeige zum Ladezustand kann auf der Innenseite der Tankklappe erfolgen, wenn die Klappe geöffnet ist.

DE 10 2011 006 476 A1 zeigt einen Ladeinrichtung für ein Elektrofahrzeug, wobei Beleuchtung der Mulde erfolgt und Licht durch transparente Bereiche der Tankklappe durchscheint.

US 2011 / 0 043 355 A1 zeigt einen Tankklappe mit Beleuchtung ohne Display und Lackierung.

Es ist Aufgabe der Erfindung eine verbesserte Version mit Erhalt der gewählten Wellenlänge und einen Informationsanzeige in einem Klappenelement einer elektrischen Ladevorrichtung am Fahrzeug zu schaffen. Auch ein Verfahren zur Betätigung eines Klappenelements mit Informationsanzeige soll gezeigt werden.

### Darstellung der Erfindung

Die Aufgabe wird erfüllt mit Informationsanzeige an der Fahrzeug-Außenseite bestehend aus mindestens einem Beleuchtungselement oder einem Display, das mit Lackschichten überlackiert ist, wobei eine der Lackschichten Wagenfarbe aufweist, und wobei ein Muster mit einem Laser durch Ablation in Form von Löchern oder Flächen in allen Lackschichten erfolgt.

Die Erfindung ermöglicht es, Information in unterschiedlichsten Designs und Farben durch ein lackiertes Exterieurbauteil hindurchzuleuchten, wobei das anzeigte Muster in seiner Darstellung farbunabhängig von der Farbe des Exterieurbauteils ist und durch dieses nicht beeinflusst wird.

Ein Ausführungsform zeigt, dass die Informationsanzeige ein Klappendeckel zur Abdeckung einer Ladesteckdose eines elektrischen Fahrzeugs ist.

Dabei kann der Klappendeckel ein Display sein oder enthalten.

Es ist von Vorteil, wenn der Klappendeckel eine mechanische und elektrische Anbindung an die zu verdeckende Aussparung aufweist.

Es ist von Vorteil, wenn der Klappendeckel mindestens eine Informationsanzeige über den Ladezustand oder mindestens eine Darstellung eines Markenzeichens über das Display enthält.

Die Aufgabe wir auch gelöst mit einem Verfahren zum Betätigen eines Klappendeckels als Informationsanzeige im Zusammenhang mit dem Laden eines elektrischen Fahrzeugs mit den Schritten:
- Initiieren der Öffnung des Klappendeckels durch den Fahrer oder durch eine Datenverbindung,
- Aktivieren des Displays oder der Beleuchtungseinrichtung des Klappendeckels während des Öffnens und Freilegen einer Aussparung,
- Schließen des Klappendeckels nach Abziehen eines Ladesteckers.

Das Verfahren zum Betätigen eines Klappendeckels umfasst auch:
- Anzeige eines Ladezustands bei geöffnetem Klappendeckel,
- Anzeigen weitere Informationen, wie bereitgestellte Kilometerleistung, Ladezeit usw. auf dem Klappendeckel.

Das Verfahren zum Betätigen eines Klappendeckels umfasst bei dem Initiieren der Öffnung des Klappendeckels, dass Beleuchtungselemente in der Aussparung des Fahrzeugs aktiviert werden.

### Beschreibung der Figuren

Fig. 1 zeigt ein beispielhaftes Bauteil im Stand der Technik,
Fig. 2 zeigt das Bauteil von Fig. 1 im beleuchteten Zustand,
Fig. 3 zeigt ein mit Laserperforierung erzeigten Muster,
Fig. 4 zeigt ein weiteres Muster,
Fig. 5 zeigt eine Bemaßung einer mit dem Laser bearbeiteten Fläche,
Fig. 6 bis Fig. 9 zeigt ein Ausführungsbeispiel einer Ladeklappe in verschiedenen Zuständen des Verfahrens.

Es werden Anzeige von Fahrzeug- Verkehrsinformationen auf der Fahrzeugaußenseite in den mit Wagenfarbe lackierten Bereichen als Ausführungsform vorgeschlagen. Die Informationen werden nur bei Bedarf eingeblendet, was bedeutet das die Bereiche der Informationseinblendung im ausgeschalteten Zustand möglichst nicht oder nur schwer erkennbar sind.

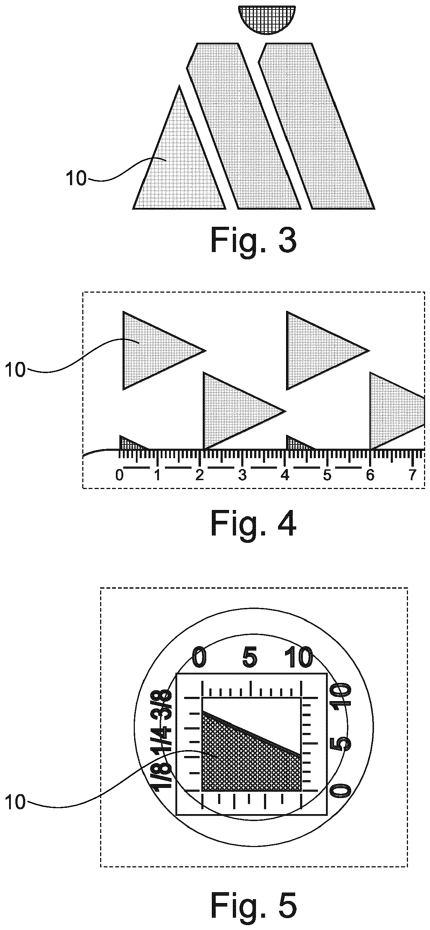

Die Durchleuchtbarkeit des Lacks wird durch Laserablation realisiert. Hierbei werden kleine Bereiche des Lacks in einem Lochmuster abgetragen, siehe Figuren 3 und 4. Die Abtragslöcher 10 weisen einen Durchmesser von 100µm (+/-50µm) auf, können aber auch größer ausgeführt sein, um die Lichttransmission zu erhöhen. In der Figur 5 sind solche Abtragslöcher 10 dargestellt, wobei die Scala in mm hinterlegt ist.

Die Sichtbarkeit der Abtragung, ebenso die Lichttransmission kann hierbei durch den Abstand der einzelnen Abtragslöcher 10 der Ablation sowie das Punktemuster selbst verändert werden. Das Substrat, das Außenbauteil 20, auf dem der Lack aufgebracht ist, ist hierbei transluzentes oder transparentes Material oder ein Display, dessen Oberfläche natürlich auch aus transparentem Material besteht. Verwendet man ein Display kann dieses auch in ein größeres Außenbauteil 20 verbaut sein.

Der Aufbau des Lacks auf der Außenseite ist für den Abtrag optimiert und besteht dabei aus mindestens zwei Schichten S, besser aber aus drei Schichten S. Die unterste Schicht wird auf einem Außenbauteil des Fahrzeugs aufgebracht und bildet eine lichtdichte Schicht, um jegliche ungewollte Transmission, nämlich Blicke auf das Außenbauteil zu verhindern. Wenn diese Schicht bereits in Wagenfarbe eingefärbt ist, so kann auf eine weitere Schicht Basislack zur Farbgebung verzichtet werden.

Im Regelfall aber ist diese erste Schicht ein Primer, auf welchen dann als zweite Schicht ein Basislack zur Farbgebung aufgetragen wird. Zusätzlich kann nun auch schon eine Schicht transparenter Lack zur Versiegelung aufgetragen werden.

Nach dem Auftrag dieser Schichten wird der Laserabtrag durch alle Schichten durchgeführt und im Anschluss das Bauteil nochmals mit einer Schicht transparentem/transluzentem Klarlack überzogen, um auch die gelaserten Bereiche zu schützen.

Das Abtragsmuster kann in unterschiedlichsten Formen angeordnet werden sodass z.B. Digitale Zahlen, Buchstaben, Füllstandsbalken, Logos oder anderes angezeigt werden kann.

Neben dem Punktabtrag kann der Lack auch flächig abgetragen werden um eine erhöhte Transmission und bessere Sichtbarkeit der auf der Lichtquelle/Display angezeigten Information darzustellen oder gewisse Bereiche hervorzuheben. Die flächige Abtragung ist gegenüber der punktuellen Abtragung auch im ausgeschalteten Zustand von außen sichtbar.

Als Lichtquelle sind LEDs, Micro LEDs, OLEDs und Displays aller möglichen Art vorstellbar. Für die vordefinierten Darstellung ist zudem durch eine Maskierung die Möglichkeit gegeben die beleuchteten Bereiche voneinander zu trennen und eine schärfere Darstellung zu erreichen.

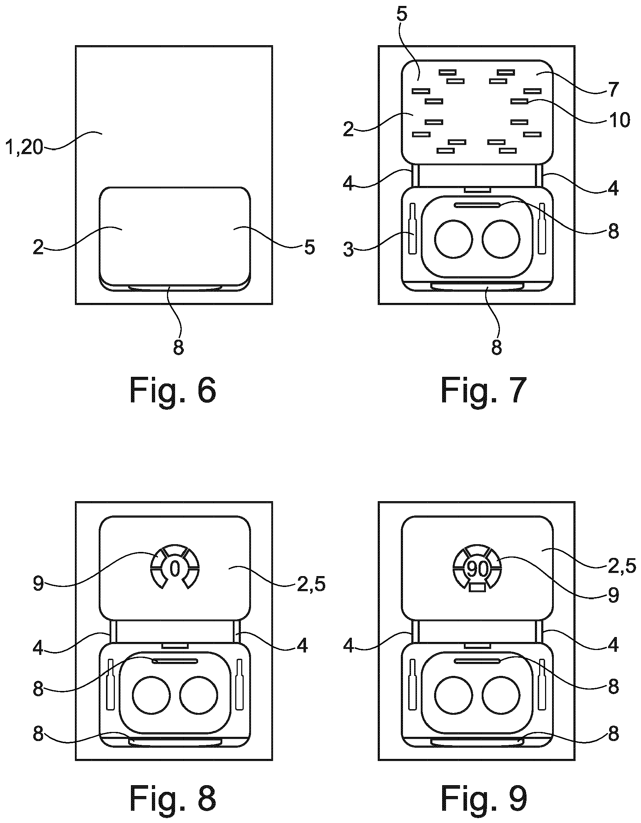

In den Figuren 6 bis 9 wird ein Ausführungsbeispiel in verschiedenen Stufen eines Verfahrens dargestellt.

Als Ausführungsbeispiel ist eine Klappe gewählt worden, die für ein elektrifiziertes Fahrzeug eine elektrische Steckdose verschließt. Die Klappe in Form einer klassischen Tankklappe weist einen Klappendeckel 2 auf, der eine Aussparung 3 im Außenbereich des Fahrzeugs 1 verschließt. Die Klappe ist ein Kunststoffbauteil 5, das ein Display 6 enthält, auf dem die bereits oben beschriebenen Schichten S der Lackierung aufgebracht sind. Alternativ wird das Display 6 hinter ein transparentes Kunststoffbauteil 5 in Form der Klappe verbaut, auf dem die Lackschichten aufgebracht sind. Das Kunststoffbauteil 5 dient dabei auch zu Befestigung der mechanischen Komponenten 4 des Klappendeckels 2.

Auch sind bereits Ablationen mit Abtragslöchern 10 in den gewünschten Bereichen der Oberfläche 7 des Klappendeckels eingebracht worden, so dass ein Durchscheinen von Licht möglich ist.

Der Klappendeckels 2 wird bevorzugt elektrisch geöffnet. Die Betätigung des Klappendeckels kann dabei auf unterschiedliche Weise erfolgen. Dabei kann der Fahrer des Fahrzeugs den Klappendeckel 2 aktiv durch Betätigung eines Schalters von innen oder mit einer Fernbedienung öffnen.

Alternativ dazu kann der Klappendeckel geöffnet werden, wenn das Fahrzeug an einer Ladesäule geparkt wird und ein Datenaustausch stattfindet.

Der Klappendeckel 2 wird dabei entweder nach oben oder zur Seite verschoben und verschwenkt.

Dabei kommt es nicht auf die Aktivierung des Klappendeckel 2 und die mechanische Ausführung des Gestänges zur Verschwenkung an. Der Klappendeckel 2 ist dabei nicht nur mechanisch mit der Aussparung 3 verbunden, sondern auch elektrisch an der Aussparung 3 kontaktiert.

Mit der Betätigung bzw. mit dem Erhalt des Befehls, die Klappe zu öffnen, werden LEDs oder andere Beleuchtungselemente 8 in der Aussparung 3 aktiviert. Diese LEDs scheinen, wie in Figur 6, dargestellt ist, bereits bei geschlossenem Klappendeckel 2 randseitig durch. Ansonsten markieren die beispielhaften Beleuchtungselemente 8 in der Aussparung 3 die untere und die obere Begrenzung der Aussparung.

Während der Klappendeckel 2 langsam öffnet, wird das Display 6 im Klappendeckel 2 aktiviert und auf der Oberfläche 7 des Klappendeckel erscheinen Muster, in diesem Beispiel waagerechte Striche. Diese Muster können beliebig ausgestaltet sein, und auch Markenzeichen umfassen.

Durch die Ansteuerung des Displays 6 ist es zum Beispiel möglich ein Markenzeichen langsam partiell erscheinen zu lassen, mehrere Markenzeichen ein-und auszuschalten oder mehrere Markenzeichen über die gesamte Fläche unterschiedlich zu arrangieren und darzustellen und blinken zu lassen. Ist der Klappendeckel 2 vollständig geöffnet, wird eine Darstellung des Ladezustands auf dem Display 6 und somit auf der Oberfläche 7 des Klappendeckel 2 dargestellt.

Im Ausführungsbeispiel wird ein Teilkreis mit unterschiedlichen Segmenten 9 dargestellt, die den Ladezustand repräsentieren und einfarbig oder auch mehrfarbig dargestellt werden können.

In Figur 9 ist die Darstellung des Ladezustands auf dem Klappendeckel zu erkennen, wie er beispielsweise nach einem Ladevorgang und dem Abziehen der elektrischen Stecker vorhanden ist.

Man erkennt in dem Teilkreis mit den Segmenten 9 eine Zahl, die in Prozent den Ladezustand darstellt. Weitere Informationen für den Fahrer des Fahrzeugs stehen ebenfalls zur Verfügung. Dabei handelt es sich beispielhaft um eine Reichweitendarstellung sowie um Ladedauer usw.

Das Ausführungsbeispiel verlangt spezielle Laser- Ablationen, die auf die darzustellenden Informationen angepasst sind.

So ist es notwendig, wenn man über die gesamte Fläche verteilte Muster darstellen will, dass die einzelnen Teilbereiche mit einem Laser freigelegt sind.

Bei der Darstellung des Ladezustands und weiterer Informationen im Zentrum des Klappendeckel 2 ist gegebenenfalls ein flächiges Perforieren der Lackschichten sinnvoll.

Mit der Beendigung des Ladevorgangs, dem Abziehen des Ladekabels bzw. der Betätigung eines Schalters oder einer Fernbedienung ist das Verfahren beendet und der Klappendeckel wird langsam wieder in die abdeckende Position zurückgeführt.

Das Display 6 auf dem Klappendeckel 2 erlischt dabei, und die Beleuchtungselemente 8 werden ausgeschaltet, sobald mal der Klappendeckel 2 vollständig geschlossen ist.

### Bezugszeichen

1 Fahrzeug
2 Klappendeckel
3 Aussparung
4 Mechanische Komponenten
5 Kunststoffbauteil
6 Display
7 Oberfläche
8 Beleuchtungselemente
9 Segmente
10 Abtragslöcher
20 Außenbauteil
S Schichten

## Patentansprüche

1. Informationsanzeige an der Fahrzeug-Außenseite bestehend aus mindestens einem Beleuchtungselement oder einem Display (6), das mit Lackschichten (S) überlackiert ist, wobei eine der Lackschichten Wagenfarbe aufweist, und wobei ein Muster mit einem Laser durch Ablation in Form von Löchern oder Flächen in allen Lackschichten (S) erfolgt, wobei die Informationsanzeige ein Klappendeckel (2) zur Abdeckung einer Ladesteckdose eines elektrischen Fahrzeugs (1) ist und der Klappendeckel (2) ein Display (6) ist oder enthält, wobei auf der Oberfläche (7) des Klappendeckels (2) Muster und Informationen darstellbar sind.

2. Informationsanzeige nach Anspruch 1, **dadurch gekennzeichnet, dass** der Klappendeckel (2) eine mechanische und elektrische Anbindung an die zu verdeckende Aussparung (3) aufweist.

3. Informationsanzeige nach einem der vorhergehenden Ansprüche 1 oder 2, **dadurch gekennzeichnet, dass** der Klappendeckel (2) mindestens eine Informationsanzeige über den Ladezustand enthält.

4. Informationsanzeige nach einem der vorhergehenden Ansprüche, **dadurch gekennzeichnet, dass** der Klappendeckel (2) mindestens eine Darstellung eines Markenzeichens über das Display (6) enthält.

5. Verfahren zum Betätigen eines Klappendeckels (2) als Informationsanzeige nach einer der vorhergehenden Ansprüche im Zusammenhang mit dem Laden eines elektrischen Fahrzeugs (1) mit den Schritten:
• Initiieren der Öffnung des Klappendeckels (2) durch den Fahrer oder durch eine Datenverbindung,
• Aktivieren des Displays (6) oder der Beleuchtungseinrichtung des Klappendeckels während des Öffnens und Freilegen einer Aussparung (3),
• Schließen des Klappendeckels (3) nach Abziehen eines Ladesteckers.

6. Verfahren zum Betätigen eines Klappendeckels nach Anspruch 5 mit
• Anzeige eines Ladezustands bei geöffnetem Klappendeckel (2),
• Anzeigen weiterer Informationen, wie bereitgestellte Kilometerleistung, Ladezeit usw. auf dem Klappendeckel (2).

7. Verfahren zum Betätigen eines Klappendeckels nach Anspruch 5 und 6, wobei bei dem Initiieren der Öffnung des Klappendeckels (2) Beleuchtungselemente (8) in der Aussparung (3) des Fahrzeugs (2) aktiviert werden.
